# EUROPEAN PATENT APPLICATION

(11) **EP 1 321 728 A1**
(43) Date of publication of application: **25.06.2003**
(21) Application number: 00955106.0
(22) Date of filing: 29.08.2000
(51) Int. Cl.: F25B 15/00

(54) **ABSORPTION REFRIGERATING MACHINE**

(71) Applicant: Kawajureinetsukougyo K.K., Kusatsu-shi, Shiga 525-8858 (JP)
(72) Inventor: TAKABATAKE, Syuzou, Kusatsu-shi, Shiga 525-8858 (JP); NAKAZIMA, Kunihiko, Kusatsu-shi, Shiga 525-8858 (JP); OHISHI, Osamu, Kusatsu-shi, Shiga 525-8858 (JP); SAITOU, Kenichi, Kusatsu-shi, Shiga 525-8858 (JP); OHTA, Masuomi, Kusatsu-shi, Shiga 525-8858 (JP)
(74) Representative: VOSSIUS & PARTNER
(86) International application number: JP0005840
(87) International publication number: WO02018850

(57) **Abstract**

An absorption refrigerator which circulates an absorption fluid from an absorber(1), through a low-temperature heat exchanger(3), a high-temperature heat exchanger(6), a high-temperature regenerator(4), the high-temperature heat exchanger(6), a low-temperature regenerator(4) and the low-temperature heat exchanger(3), back to the absorber(1), comprising a medium-temperature heat exchanger(11) heating the absorption fluid and a medium temperature regenerator(10) heating and concentrating the absorption fluid which are disposed between the high-temperature heat exchanger(6) and low-temperature regenerator(4), improving in refrigeration and heat efficiency (Fig. 1).

## Description

### TECHNICAL FIELD

The present invention relates to an absorption refrigerator, and more particularly, to an absorption refrigerator provided with a medium-temperature regenerator to improve the efficiency with respect to a double-effect type absorption refrigerator. Here, an absorption water cooling/heating device is to be included in the refrigerator.

### BACKGROUND ART

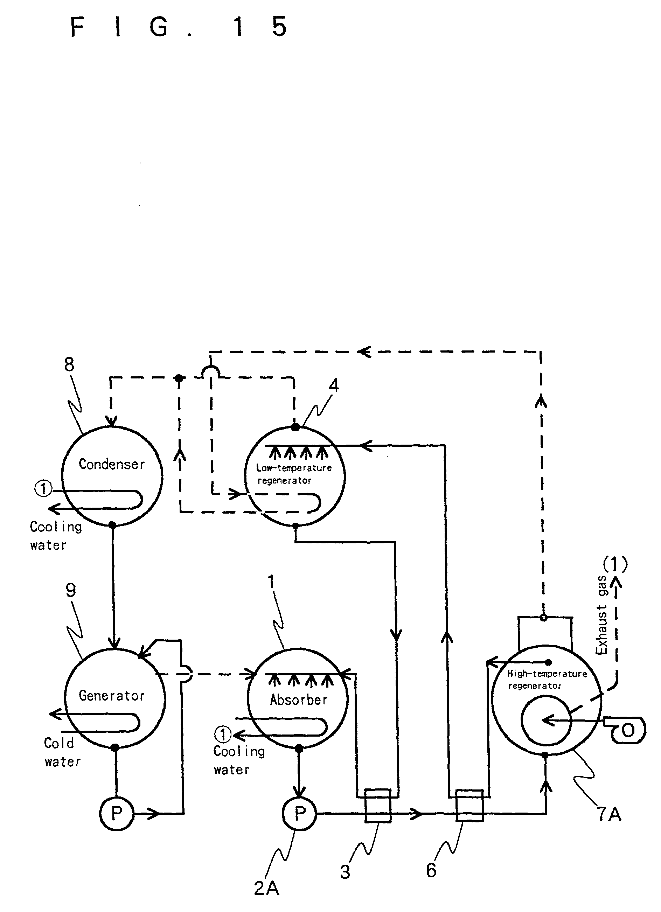

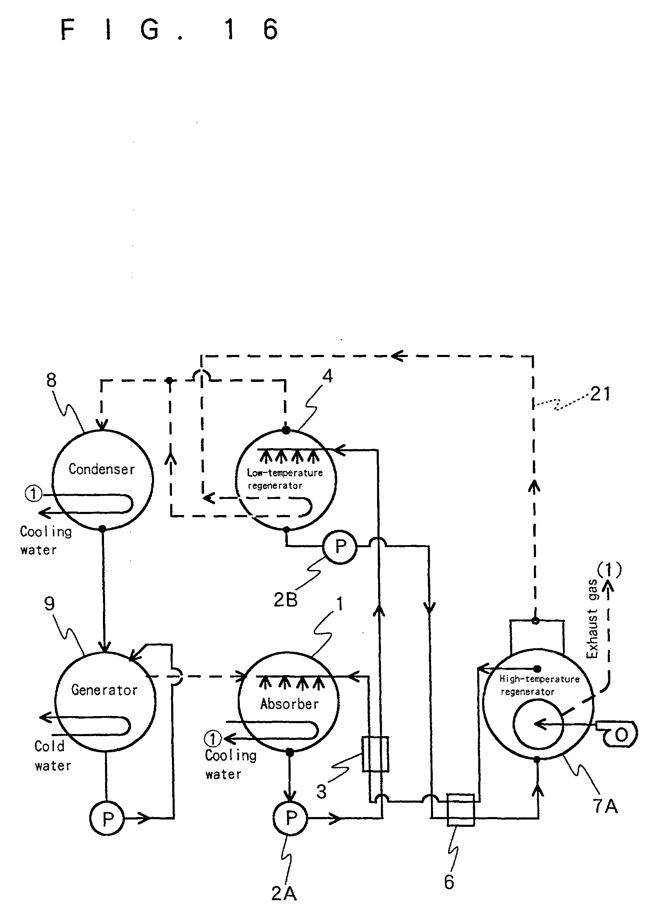

As absorption refrigerators of conventional type, there are so-called series cycle double-effect type absorption refrigerators in which absorption fluid is circulated from an absorber, through a low-temperature heat exchanger, a high-temperature heat exchanger, a high-temperature regenerator, the high-temperature heat exchanger, a low-temperature regenerator, and the low-temperature heat exchanger, back to the absorber as shown in Fig. 15, and so-called reverse cycle double-effect type absorption refrigerators in which absorption fluid is circulated from an absorber, through a low-temperature heat exchanger, a low-temperature regenerator, a high-temperature heat exchanger, a high-temperature regenerator, the high-temperature heat exchanger, and a low-temperature heat exchanger, back to the absorber as shown in Fig. 16.

However, since the conventional double-effect type absorption refrigerators are provided only two types of regenerator, namely, a low-temperature regenerator and a high-temperature regenerator, there are problems such that it is difficult to make further improvement from the present situation even with the addition of various improvements to enhance the refrigeration and heat efficiency and also hard to obtain better effects rather causing increase in manufacturing cost.

The present invention has been made to solve the problems of the prior art, and its object is to provide an absorption refrigerator improved in refrigeration and heat efficiency.

### DISCLOSURE OF THE INVENTION

The first embodiment of the invention is an absorption refrigerator which circulates an absorption fluid from an absorber, through a low-temperature heat exchanger, a high-temperature heat exchanger, a high-temperature regenerator, the high-temperature heat exchanger, a low-temperature regenerator and the low-temperature heat exchanger, back to the absorber, comprising a medium-temperature heat exchanger heating the absorption fluid and a medium temperature regenerator heating and concentrating the absorption fluid which are disposed between the high-temperature heat exchanger and low-temperature regenerator; wherein the medium temperature heat exchanger is so as to heat the absorption fluid discharged from the low-temperature heat exchanger with the absorption fluid discharged from the medium-temperature regenerator.

The second embodiment of the invention is an absorption refrigerator which circulates an absorption fluid from an absorber, through a low-temperature heat exchanger, a high-temperature heat exchanger, a high-temperature regenerator, the high-temperature heat exchanger, a low-temperature regenerator and the low-temperature heat exchanger, back to the absorber, comprising a medium-temperature heat exchanger heating the absorption fluid and a medium temperature regenerator heating and concentrating the absorption fluid, a first feeding means extracting a part or all of absorption fluid from the low-temperature regenerator and feeding same to the medium-temperature regenerator, and a second feeding means extracting a part or all of absorption fluid from the medium-temperature regenerator and feeding same to the high-temperature regenerator which are disposed between the high-temperature heat exchanger and low-temperature regenerator; wherein the medium temperature heat exchanger is so as to heat the absorption fluid discharged from the low-temperature heat exchanger with the absorption fluid discharged from the medium-temperature regenerator.

It is preferable that the absorption refrigerator of the invention comprises a heat exchanger which heats the absorption fluid of which heating source is the heating medium used for high temperature regeneration at the high-temperature regenerator.

For example, it is preferable that in the first embodiment of the absorption refrigerator of the invention, when the high-temperature regenerator of direct fired type is employed, the absorption refrigerator comprises an auxiliary regenerator, of which heating source is the combustion exhaust gas of the high-temperature regenerator, at the absorption fluid inlet side to the medium-temperature regenerator in the range from the high-temperature heat exchanger to the medium-temperature regenerator, and/or at the absorption fluid inlet side of the low-temperature regenerator in the range from the medium-temperature heat exchanger to the low-temperature regenerator. Also it is preferable that in the first embodiment of the absorption refrigerator of the invention, when the high-temperature regenerator of steam heating type is employed, the absorption refrigerator comprises an auxiliary regenerator, of which heating source is the steam drain from the high-temperature regenerator at the absorption fluid inlet side low-temperature regenerator in the range from the medium-temperature heat exchanger to the low-temperature regenerator.

It is preferable that in the second embodiment of the absorption refrigerator of the invention, when the high-temperature regenerator of direct fired type is employed, the absorption refrigerator comprises an auxiliary regenerator, of which heating source is the combustion exhaust gas of the high-temperature regenerator, at the absorption fluid inlet side to the low-temperature regenerator in the range from the low-temperature heat exchanger to the low-temperature regenerator, and/or at the absorption fluid inlet side of the medium-temperature regenerator in the range from the medium-temperature heat exchanger to the medium-temperature regenerator. Also, it is preferable that in the second embodiment of the absorption refrigerator of the invention, when the high-temperature regenerator of steam heating type is employed, the absorption refrigerator comprises an auxiliary regenerator, of which heating source is the steam drain from the high-temperature regenerator at the absorption fluid inlet side low-temperature regenerator in the range from the low-temperature heat exchanger to the low-temperature regenerator.

Further, it is preferable that in the second embodiment of absorption refrigerator of the invention a part of the absorption fluid is bypassed from upstream side of the first feeding means to the inlet side of the heating line of the low-temperature heat exchanger, and also it is preferable that in the second embodiment of the absorption refrigerator of the invention a part of the absorption fluid is bypassed from upstream side of the second feeding means to the heating line inlet side of the medium-temperature heat exchanger.

Still further, it is preferable that in the absorption refrigerator of the invention, a first heat exchanger of which heating source is the refrigerant drain after heating at the low-temperature regenerator is located in parallel with the low-temperature heat exchanger or in series with same at the rare absorption fluid outlet side of the low-temperature heat exchanger.

Still further, it is preferable that in the absorption refrigerator of the invention, a second heat exchanger of which heating source .is the refrigerant drain after heating at the medium-temperature regenerator is located in parallel with the medium-temperature heat exchanger or in series with same at the intermediate absorption fluid outlet side of the medium-temperature heat exchanger.

Furthermore, it is preferable that in the absorption refrigerator of the invention, the absorption refrigerator comprises a plurality of combinations of absorber and generator, and cold water, cooling water and absorption fluid are supplied in series to the plurality of combinations.

Still furthermore, it is preferable that in the absorption refrigerator of the invention, the absorption refrigerator comprises a plurality of combinations of absorber and generator, and cold water and absorption fluid are series-supplied to the plurality of combinations while cooling water is supplied in parallel to the plurality of combinations.

Moreover, it is preferable that in the absorption refrigerator of the invention, cooling water is supplied from a condenser to the absorber.

The absorption refrigerator having a cofiguration as described above is improved in refrigeration efficiency and heat efficiency.

### BRIEF DESCRIPTION OF THE INVENTION

Fig. 1 is a schematic drawing of the example 1 of the invention.

Fig. 2 is a schematic drawing of the example 2 of the invention.

Fig. 3 is a schematic drawing of the example 3 of the invention.

Fig. 4 is a schematic drawing of essential components in the example 4 of the invention.

Fig. 5 is a schematic drawing of essential components in the example 5 of the invention.

Fig. 6 is a schematic drawing of the example 6 of the invention.

Fig. 7 is a schematic drawing of the example 7 of the invention.

Fig. 8 is a schematic drawing of the example 8 of the invention.

Fig. 9 is a schematic drawing of the example 9 of the invention.

Fig. 10 is a schematic drawing of the example 10 of the invention.

Fig. 11 is a schematic drawing of essential components in the example 11 of the invention.

Fig. 12 is a schematic drawing of essential components in the example 12 of the invention.

Fig. 13 is a drawing equivalent to Fig. 1 of the embodiment 13 of the invention.

Fig. 14 is a drawing equivalent to Fig. 5 of the embodiment 13 of the invention.

Fig. 15 is a drawing equivalent to Fig. 1 of the conventional absorption refrigerator.

Fig. 16 is a drawing equivalent to Fig. 5 of the conventional absorption refrigerator.

### BEST MODE FOR CARRING OUT OF THE INVENTION

Hereinafter, referring to the appended drawings, the invention is described in accordance with the embodiments, but it is to be understood that the present invention is not limited in its application to only these embodiments.

The invention basically has a configuration such that a medium-temperature regenerator and a medium-temperature heat exchanger are located between a low-temperature regenerator and a high-temperature regenerator.

Specifically, the first embodiment of the invention is an absorption refrigerator which basically circulates the absorption fluid from an absorber, through a low-temperature heat exchanger, a high-temperature heat exchanger, a high-temperature regenerator, the high-temperature heat exchanger, a low-temperature regenerator and the low-temperature heat exchanger, back to the absorber, comprising a medium-temperature heat exchanger heating the absorption fluid and a medium-temperature regenerator heating and concentrating the absorption fluid which are disposed between the high-temperature heat exchanger and low-temperature regenerator; wherein the medium-temperature heat exchanger is constructed so as to heat the absorption fluid discharged from the low-temperature heat exchanger with the absorption fluid discharged from the medium-temperature regenerator.

Also, the second embodiment of the invention is an absorption refrigerator which circulates the absorption fluid from an absorber, through a low-temperature heat exchanger, a low-temperature regenerator, a high-temperature heat exchanger, a high-temperature regenerator, the high-temperature heat exchanger and the low-temperature heat exchanger, back to the absorber, comprising a medium-temperature heat exchanger heating the absorption fluid, a medium-temperature regenerator heating and concentrating the absorption fluid, a first feeding means extracting a part or all of the intermediate absorption fluid from the low-temperature regenerator and feeding same to the medium-temperature regenerator and a second feeding means extracting a part or all of the concentrated absorption fluid from the medium-temperature regenerator and feeding same to the high-temperature regenerator which are disposed between the low-temperature regenerator and high-temperature heat exchanger wherein the medium-temperature heat exchanger is constructed so as to heat the absorption fluid discharged from the low-temperature regenerator with the absorption fluid discharged from the high-heat exchanger.

In the first embodiment of the invention, the intermediate absorption fluid regenerated by a high-temperature regenerator is fed to a medium-temperature regenerator via the high-temperature heat exchanger. In this feeding passage, the intermediate absorption fluid heats the rare absorption fluid from the absorber at a high-temperature heat exchanger. Also, at a medium-temperature heat exchanger, the concentrated absorption fluid from the medium-temperature regenerator heats the rare absorption fluid from the absorber. On the other hand, at the high-temperature regenerator, a part of the refrigerant absorbed by the rare absorption fluid is discharged as refrigerant steam at the concentration of the absorption fluid, and the refrigerant steam is fed to the medium-temperature regenerator as heating steam.

The intermediate absorption fluid fed to the medium-temperature regenerator is regenerated at a medium temperature by the refrigerant steam from the high-temperature regenerator to become concentrated absorption fluid (medium-concentrated absorption fluid), and thereafter, the absorption fluid is fed to a low-temperature regenerator through the medium-temperature heat exchanger. The concentrated absorption fluid heats the rare absorption fluid from the absorber as described above.

Thus, in the first embodiment of the invention, since the medium-temperature heat exchanger and the medium-heat regenerator are disposed between the high-temperature regenerator and the low-temperature regenerator, the amount of high-quality fuel consumed is reduced as a whole, thereby achieving the energy and raw material saving purpose.

On the other hand, in the second embodiment of the invention, intermediate absorption fluid regenerated at a low-temperature regenerator is fed to a medium-temperature regenerator via a medium-temperature heat exchanger. The intermediate absorption fluid led to the medium-temperature regenerator is regenerated at a medium temperature by refrigerant steam from a high-temperature regenerator to become a concentrated absorption fluid and is fed to the high-temperature regenerator via a high-temperature heat exchanger. Also, at the medium-temperature heat exchanger, heat is exchanged between the intermediate absorption fluid and highly concentrated absorption fluid. That is, the intermediate absorption fluid is heated by the highly concentrated absorption fluid. On the other hand, at the medium-temperature regenerator, a part of the refrigerant absorbed by the intermediate absorption fluid in becoming concentrated is discharged as refrigerant steam, and the refrigerant steam is fed as heating steam to the low-temperature regenerator.

In this way, in the second embodiment of the invention, since a medium-temperature heat exchanger and medium-temperature regenerator are located between a low-temperature regenerator and high-temperature regenerator, the amount of high-quality fuel consumed per cooling output may be reduced as a whole, making it possible to achieve the energy and raw material saving purpose.

Also, in the present invention, it is allowable to additionally include the following configuration for the purpose of improving the heat efficiency.

For example, it is allowable to install a heat exchanger that heats absorption fluid of which heating source is of the heating medium utilized for high temperature regeneration at the high-temperature regenerator. In this way, the surplus heat of the heating medium utilized for heating at the high-temperature regenerator can be used, thereby achieving the purpose of reducing the externally supplied heat. That is, it is possible to further save the energy consumed by the absorption refrigerator.

In other words, in the first embodiment of the invention, when a high-temperature regenerator of the direct fired heating type is employed, it is allowable to install an auxiliary regenerator, of which heating source is of combustion exhaust gas of the high-temperature regenerator, at the inlet side of absorption fluid to the medium-temperature regenerator in the range from the medium-temperature heat exchanger and medium-temperature regenerator, and/or at the inlet side of absorption fluid to the low-temperature regenerator in the range from the medium-temperature heat exchanger and low-temperature regenerator. Thus, it is possible to achieve the reduction of externally supplied heat, thereby promoting energy saving. Also, when a high-temperature regenerator of the steam heating type is employed, it is allowable to install an auxiliary regenerator of which heating source is steam drain from the high-temperature regenerator, at the inlet side of absorption fluid to the low-temperature regenerator in the range from the medium-temperature heat exchanger to the low-temperature regenerator. Thus, it is possible to achieve the reduction of externally supplied heat, thereby promoting energy saving.

On the other hand, in the second embodiment of the invention, when a high-temperature regenerator of direct fired heating type is employed, it is allowable to install an auxiliary regenerator of which heating source is combustion exhaust gas of the high-temperature regenerator, at the inlet side of absorption fluid to the low-temperature regenerator in the range from the low-temperature heat exchanger to the low-temperature regenerator, and/or at the absorption fluid inlet side to the medium-temperature regenerator in the range from the medium-temperature heat exchanger to the medium-temperature regenerator. Thus, it is possible to achieve the reduction of externally supplied heat, thereby promoting energy saving. Also, when a high-temperature regenerator of steam heating type is employed, it is allowable to install an auxiliary regenerator of which heating source is of steam drain from the high-temperature regenerator at the inlet side of absorption fluid to the low-temperature regenerator in the range from the low-temperature heat exchanger to the low-temperature regenerator. Thus, it is possible to achieve the reduction of externally supplied heat, thereby promoting energy saving.

Incidentally, in the second embodiment of the invention, it is allowable to let a part of the absorption fluid be bypassed from upstream side of the first feeding means to the heating line inlet side of the low-temperature heat exchanger or from upstream side of the second feeding means to the heating line inlet side of the low-temperature heat exchanger. In this way, the amount of lithium supplied to the higher temperature side can be reduced while heat losses generated at the high-temperature side may be decreased and the volume of absorption fluid returned to the absorber is increased, therefore the prevention of rare absorption fluid pump cavitation and the reduction of noise can be achieved.

In the first and second embodiments of the invention, it is allowable that a first heat exchanger that heats the rare absorption fluid of which heating source is refrigerant drain after heating at the low-temperature regenerator is located parallel to the low-temperature heat exchanger, or in series with the low-temperature heat exchanger at the rare absorption fluid outlet side thereof. Thus, it is possible to make the best use of refrigerant drain heat after heating at the low-temperature regenerator and to achieve the reduction of externally supplied heat, thereby promoting energy saving.

Also, in the first and second embodiments of the invention, it is allowable that a heat exchanger that heats intermediate absorption fluid or rare absorption fluid of which heating source is refrigerant drain after heating at the medium-temperature regenerator is located in parallel with the medium-heat exchanger, or in series with the medium-heat exchanger at the intermediate absorption fluid or rare absorption fluid outlet side of the medium-temperature heat exchanger. Thus, it is possible to make the best use of refrigerant drain heat after heating at the medium-temperature regenerator and to achieve the reduction of externally supplied heat, thereby promoting energy saving.

Further, in the first and second embodiments of the invention, it is allowable to install a plurality of combinations of absorber and generator and to supply cold water, cooling water and absorption fluid to the plurality of combinations in series. Thus, the internal pressures of the absorber and generator can be gradually changed per group and it makes the use possible in the range of more rarefied absorption fluid concentration, thereby improving the efficiency and achieving the considerable reduction in size of high-temperature regenerator and heat exchangers. As a result, the miniaturization of absorption refrigerators is achieved.

Still further, in the first and second embodiments of the invention, it is allowable to install a plurality of combinations of absorber and generator and to supply cold water and absorption fluid to the plurality of combinations in series and to supply cooling water to the plurality of combinations in parallel. Thus, same as mentioned above, the internal pressures of the absorber and generator can be changed per group, and it makes the use possible in the range of more rarefied absorption fluid concentration, thereby improving the efficiency and achieving the considerable reduction in size of high-temperature regenerator and heat exchangers. As a result, the miniaturization of absorption refrigerators is achieved.

Furthermore, in the first and second embodiments of the invention, it is allowable that cooling water is fed from a condenser to the absorber. In this way, the temperature and pressure buildup in a high-temperature regeneration system, that is the disadvantage of an absorption refrigerator having a plurality of regenerators, can be decreased to a relatively low level. That is, since the condenser is decreased in temperature and pressure, the low-temperature regenerator is decreased in temperature, causing the temperature of the high-temperature regenerator to decrease.

The invention is described according to the examples in the following with reference to the appended drawings, but it is to be understood that the present invention is not limited in its application to only these examples.

### Example 1:

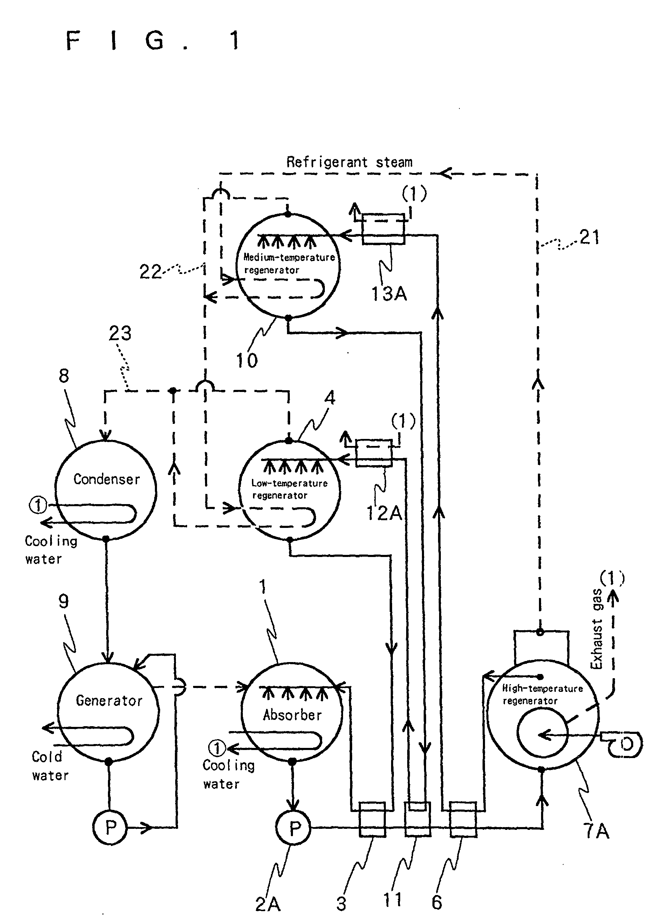

Fig. 1 shows an absorption refrigerator in accordance with the example 1 of the invention. The example 1 is provided with medium-temperature regenerator 10 and medium-temperature heat exchanger 11 for double-effect absorption refrigerator of series cycle type comprising absorber 1, a pump (rare absorption fluid pump) 2A, low-temperature heat exchanger 3, low-temperature regenerator 4, high-temperature-heat exchanger 6, direct fired heating type high-temperature regenerator 7A, condenser 8 and generator 9. And, in the example 1, auxiliary regenerator 12A and auxiliary regenerator 13A are installed in addition to medium-temperature regenerator 10 and medium-temperature heat exchanger 11.

In Fig. 1 and each of the following drawings, an arrow with a real line shows the direction of the flow of absorption fluid or refrigerant, and an arrow with a broken line shows the direction of the flow of steam (steam drain), refrigerant steam (refrigerant drain) or exhaust gas.

Next, the circulation cycle of absorption fluid in an absorption refrigerator having such a configuration is explained in order.

Rare absorption fluid lowered in concentration, absorbing a large volume of refrigerant steam in absorber 1, is first fed from absorber 1 to high-temperature regenerator 7A by means of rare absorption fluid pump 2A. The rare absorption fluid is heated at low-temperature heat exchanger 3, medium-temperature heat exchanger 11 and high-temperature heat exchanger 6 before it is introduced into high-temperature regenerator 7A. That is, the rare absorption fluid is heated with the highly concentrated absorption fluid regenerated at low-temperature heat exchanger 3, with medium concentrated absorption fluid regenerated at medium-temperature heat exchanger 11, and with the intermediate absorption fluid regenerated at high-temperature heat exchanger 6. And, the rare absorption fluid is regenerated at high-temperature regenerator 7A, then discharges a part of the absorbed refrigerant and as a result increases in concentration to become an intermediate absorption fluid of intermediate concentration.

The intermediate absorption fluid is fed from high-temperature regenerator 7A to medium-temperature regenerator 10. The intermediate absorption fluid undergoes heat exchange at high-temperature heat exchanger 6 and auxiliary regenerator 13A before it is introduced into medium-temperature regenerator 10. That is, the intermediate absorption fluid heats the rare absorption fluid at high-temperature heat exchanger 6 and is heated with the exhaust gas at auxiliary regenerator 13A. And, the intermediate absorption fluid is regenerated at medium-temperature regenerator 10, then discharges a part of the absorbed refrigerant and as a result increases in concentration to become medium concentrated absorption fluid of high concentration.

The medium concentrated absorption fluid is fed from medium-temperature regenerator 10 to low-temperature regenerator 4. The medium concentrated absorption fluid undergoes heat exchange at auxiliary regenerator 12A before it is introduced into medium-temperature regenerator 10. That is, the medium concentrated absorption fluid is heated with the exhaust gas at auxiliary regenerator 12A, while it heats the rare absorption fluid at medium-temperature heat exchanger 11. And, the medium concentrated absorption fluid is regenerated at low-temperature regenerator 4, then discharges a part of the absorbed refrigerant and as a result increases in concentration to become highly concentrated absorption fluid of high concentration.

The highly concentrated absorption fluid is returned from low-temperature regenerator 4 to absorber 1. The highly concentrated absorption fluid undergoes heat exchange at low-temperature heat exchanger 3 before it is returned to absorber 1. That is, the highly concentrated absorption fluid heats the rare absorption fluid at low-temperature heat exchanger 3. And, the highly concentrated absorption fluid is cooled with the cooling water applied to absorber 1 while absorbing a large volume of refrigerant steam supplied by generator 9 to become a rare absorption fluid again.

On the other hand, the refrigerant steam produced at high-temperature regenerator 7A is fed as heating steam to medium-temperature regenerator 10 through pipe 21 and is used for regeneration at medium-temperature regenerator 10. And, the refrigerant steam, after being used for regeneration at medium-temperature regenerator 10, flows into pipe 22.

The combustion exhaust gas discharged from high-temperature regenerator 7A, as described above, is delivered as heating source to the above-mentioned two auxiliary regenerators 12A, 13A. In this connection, it is allowable to employ a series-supply system such that the combustion exhaust gas is first delivered to auxiliary regenerator 13A and then to auxiliary regenerator 12A, and it is also allowable that the combustion exhaust gas is parallel-supplied to auxiliary regenerators 12A and 13A.

### Example 2:

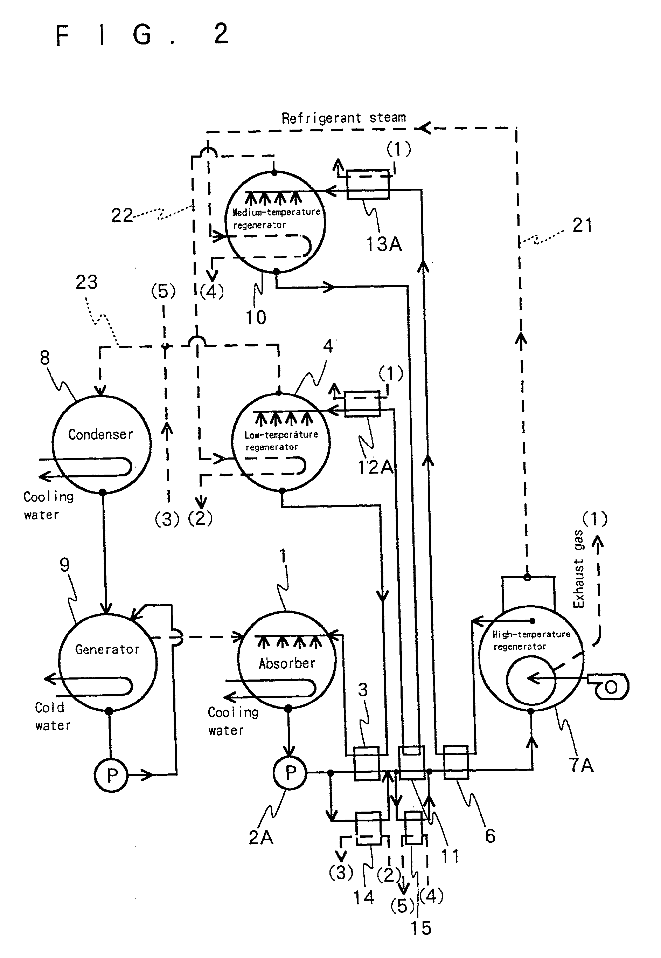

Fig. 2 shows the example 2 of the present invention. The example 2 is an innovation on the example 1. As shown in Fig. 2, there is provided heat exchanger 14, which heats the rare absorption fluid with refrigerant drain after heating at low-temperature regenerator 4, in parallel to low-temperature heat exchanger 3, and also heat exchanger 15, which heats the rare absorption fluid with refrigerant drain after heating at medium-temperature regenerator 10, in parallel to medium-temperature heat exchanger 11. Each refrigerant drain fed to the heat exchanger 14 and heat exchanger 15 flows into pipe 23 after coming out of the heat exchanger 14 and exchanger 15. Incidentally, it is allowable to install only one of the heat exchanger 14 and heat exchanger 15. Also, it is allowable that the heat exchanger 14 is series-installed at the rare absorption fluid outlet side of low-temperature heat exchanger 3 and that the heat exchanger 15 is series-installed at the absorption fluid outlet side of medium-temperature heat exchanger 11.

In this way, the example 2 being provided with such configuration, the heat of cooling drain, subjected by cooling water to cooling and radiation, is recovered and effectively used for heating the absorption fluid, and the energy saving purpose can be achieved by reducing the quantity of heat at high-temperature regenerator 7A.

### Example 3:

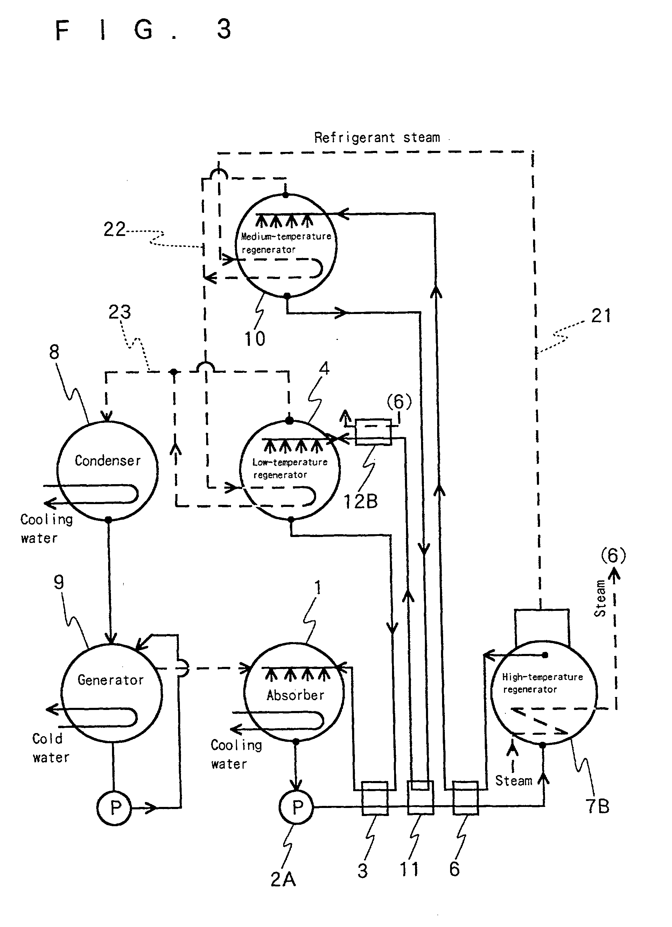

Fig. 3 shows the example 3 of the present invention. The example 3 is an innovation on the example 1. As shown in Fig. 3, there is provided a steam heating type high-temperature regenerator 7B in place of high-temperature regenerator 7, and an auxiliary regenerator 12B, in place of auxiliary regenerator 12, using as heating source the steam drain utilized for regeneration at high-temperature regenerator 7B.

Thus, the example 3 being provided with such configuration, the heat of steam drain either returned and supplied to the boiler or discharged is recovered and effectively used for heating the absorption fluid, and the energy saving purpose can be achieved by reducing the quantity of heat at high-temperature regenerator 7B.

### Example 4:

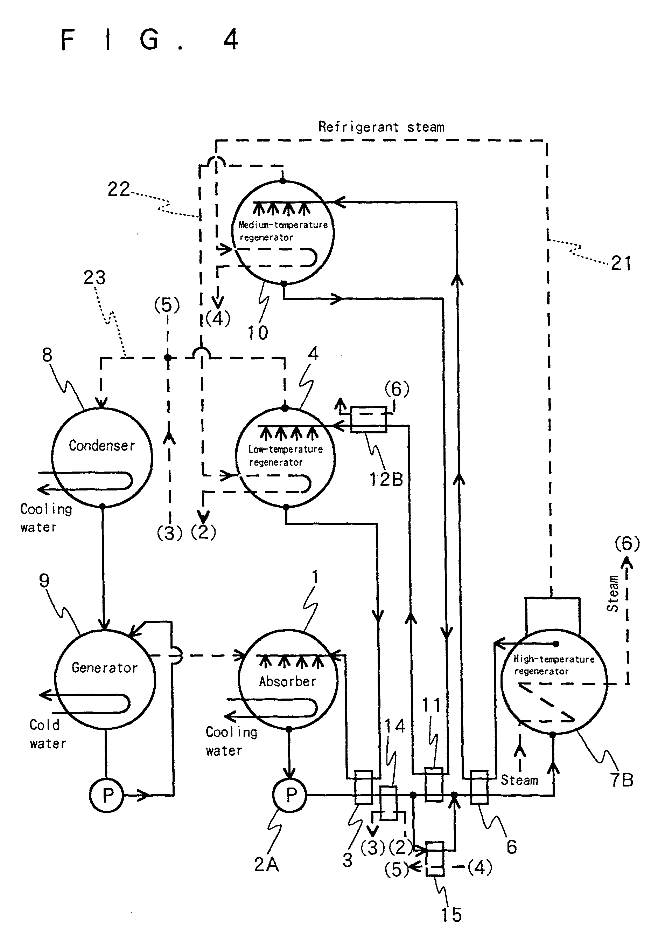

Fig. 4 shows the example 4 of the present invention. The example 4 is an innovation on the example 3. As shown in Fig. 4, a heat exchanger 14, which heats the rare absorption fluid with refrigerant drain after heating at low-temperature regenerator 4, is series-installed at the rare absorption fluid outlet side of low-temperature heat exchanger 3, and a heat exchanger 15, which heats the intermediate absorption fluid with refrigerant drain after heating at medium-temperature regenerator 10, is installed in parallel to medium-temperature heat exchanger 11. Each refrigerant drain supplied to the heat exchanger 14 and heat exchanger 15 flows into pipe 23 after coming out of the heat exchanger 14 and heat exchanger 15. Incidentally, it is allowable to install only one of the heat exchangers 14 and 15. Also, it is allowable that the heat exchanger 14 is installed in parallel to low-temperature heat exchanger 3 and that the heat exchanger 15 is series-installed at the rare absorption fluid outlet side of medium-temperature heat exchanger 11.

Thus, the example 4 being provided with such configuration, the heat of refrigerant drain, subjected by cooling water to cooling and radiation, is recovered and effectively used for heating the absorption fluid, and the energy saving purpose can be achieved by reducing the quantity of heat at high-temperature regenerator 7B.

### Example 5:

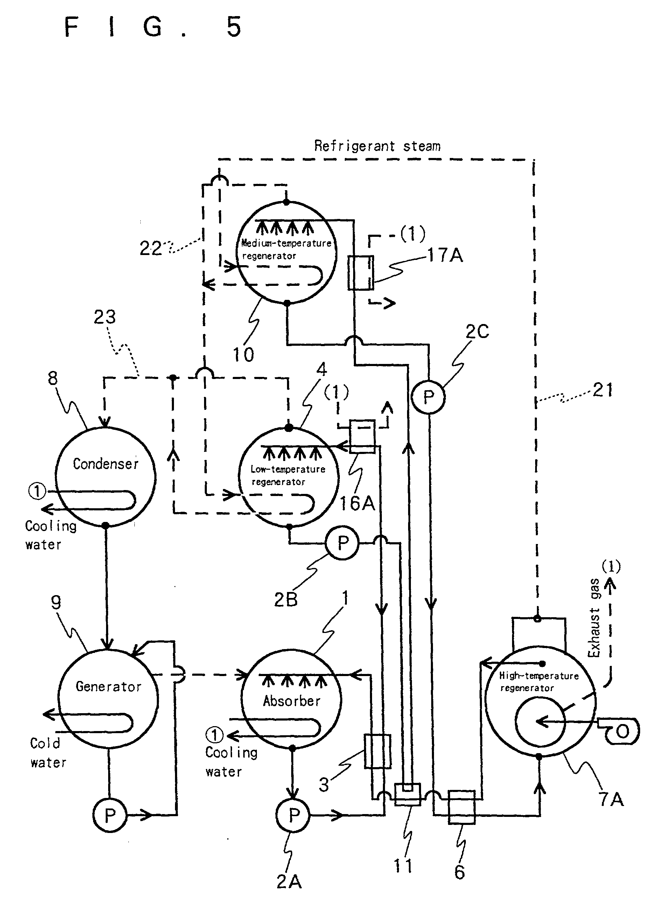

Fig. 5 shows an absorption refrigerator in accordance with the example 5 of the invention. The example 5 is provided with medium-temperature regenerator 10 and medium-temperature heat exchanger 11 for double-effect absorption refrigerator of reverse cycle type comprising absorber 1, pump (rare absorption fluid pump) 2A, pump (intermediate absorption fluid pump) 2B, pump (concentrated absorption fluid pump) 2C, low-temperature heat exchanger 3, low-temperature regenerator 4, high-temperature heat exchanger 6, direct fired heating type high-temperature regenerator 7A, condenser 8 and generator 9. And, in the example 5, auxiliary regenerator 16A and auxiliary regenerator 17A are installed in addition to the medium-temperature regenerator 10 and medium-temperature heat exchanger 11.

The absorption fluid circulation cycle of an absorption refrigerator having such configuration is described in the following.

First, rare absorption fluid lowered in concentration, absorbing a large volume of refrigerant steam in absorber 1, is fed from absorber 1 to low-temperature regenerator 4 by means of rare absorption fluid pump 2A. The rare absorption fluid is heated at low-temperature heat exchanger 3 and auxiliary regenerator 16A before it is introduced into low-temperature regenerator 4. That is, the rare absorption fluid is heated with the spraying concentrated absorption fluid at low-temperature heat exchanger 3, and with the exhaust gas utilized for regeneration at auxiliary regenerator 16A. And, the rare absorption fluid is regenerated at low-temperature regenerator 4, then discharges a part of the absorbed refrigerant and as a result increases in concentration to become an intermediate absorption fluid of intermediate concentration. In this example 5, the absorption fluid is not fed from low-temperature regenerator 4 and medium-temperature regenerator 10 to the absorption fluid line ranging from high-temperature regenerator 7A to absorber 1, and therefore the concentration of the spraying concentrated absorption fluid is the same as that of the highly concentrated absorption fluid.

The intermediate absorption fluid is fed from low-temperature regenerator 4 to medium-temperature regenerator 10. The intermediate absorption fluid undergoes heat exchange at medium-temperature heat exchanger 11 and auxiliary regenerator 17A before it is introduced into medium-temperature regenerator 10. That is, the intermediate absorption fluid is heated with the highly concentrated absorption fluid at medium-temperature heat exchanger 11 and with the exhaust gas at auxiliary regenerator 17A. And, the intermediate absorption fluid is regenerated at medium-temperature regenerator 10, then discharges a part of the absorbed refrigerant and as a result increases in concentration to become a concentrated absorption fluid of high concentration.

The intermediate absorption fluid is fed from medium-temperature regenerator 10 to high-temperature regenerator 7A. The intermediate absorption fluid undergoes heat exchange at high-temperature heat exchanger 6 before it is introduced into high-temperature regenerator 7A. That is, the intermediate absorption fluid is heated with highly concentrated absorption fluid at high-temperature heat exchanger 6. And, the concentrated absorption fluid is regenerated at high-temperature regenerator 7A, then discharges a part of the absorbed refrigerant and as a result increases in concentration to become a highly concentrated absorption fluid of high concentration.

The highly concentrated absorption fluid is returned from high-temperature regenerator 7A to absorber 1. The highly concentrated absorption fluid undergoes heat exchange at high-temperature heat exchanger 6, medium-temperature heat exchanger 11 and low-temperature heat exchanger 3 before it is returned to absorber 1. That is, the highly concentrated absorption fluid heats the concentrated absorption fluid at high-temperature heat exchanger 6, the intermediate absorption fluid at medium-temperature heat exchanger 11, and the rare absorption fluid at low-temperature heat exchanger 3, respectively. And, the highly concentrated absorption fluid (spraying concentrated absorption fluid) is cooled with the cooling water fed to absorber 1 while absorbing a large volume of refrigerant steam supplied by generator 9 to become a rare absorption fluid again.

On the other hand, the refrigerant steam generated at the high-temperature regenerator 7A is fed as heating steam to medium-temperature regenerator 10 through pipe 21 and is used for regeneration at medium-temperature regenerator 10. And, the refrigerant steam, after being used for regeneration at medium-temperature regenerator 10, flows into pipe 22.

The combustion exhaust gas discharged from the high-temperature regenerator 7A, as described above, is delivered as heating source to the above-mentioned two auxiliary regenerators 16A, 17A. In this connection, it is allowable to employ a series-supply system such that the combustion exhaust gas is first delivered to auxiliary regenerator 17A and then to auxiliary regenerator 16A, and it is also allowable that the combustion exhaust gas is parallel-supplied to auxiliary regenerators 16A and 17A.

Thus, in the example 5 having such configuration, the heat of high temperature combustion exhaust gas discharged into atmospheric air is restored and effectively used for heating the absorption fluid, and the energy saving purpose can be achieved by reducing the quantity of heat at the high-temperature regenerator.

### Example 6:

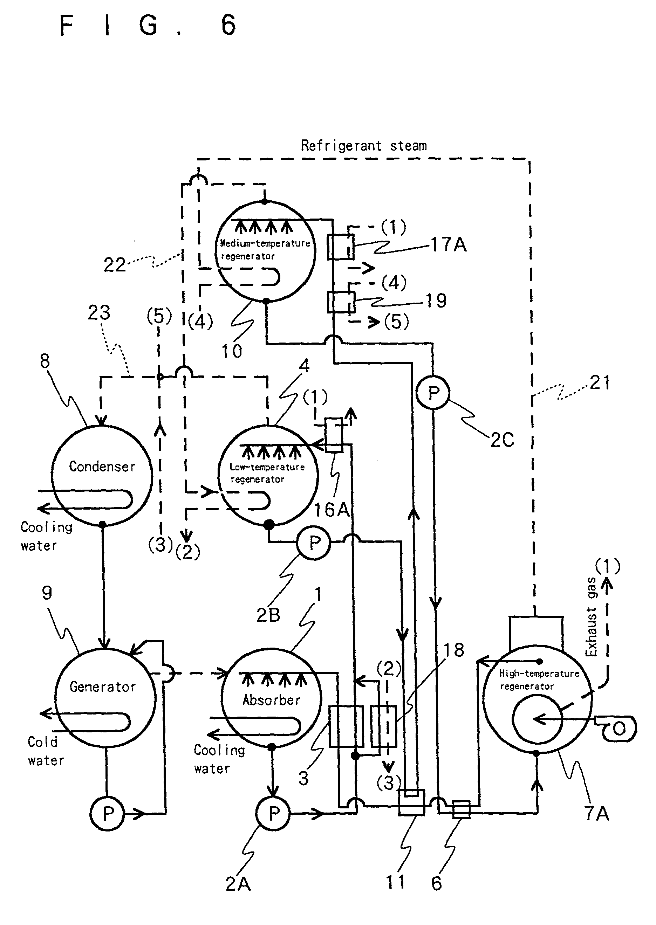

Fig. 6 shows the example 6 of the present invention. The example 6 is an innovation on the example 5. As shown in Fig. 6, there is provided a heat exchanger 18, which heats the rare absorption fluid with refrigerant drain after heating at low-temperature regenerator 4, in parallel to low-temperature heat exchanger 3, and also a heat exchanger 19, which heats the intermediate absorption fluid with refrigerant drain after heating at medium-temperature regenerator 10, in series with the intermediate absorption fluid outlet side of medium-temperature heat exchanger 11. Each refrigerant drain fed to the heat exchanger 18 and heat exchanger 19 flows into pipe 23 after coming out of the heat exchanger 18 and exchanger 19.

Incidentally, it is allowable to install only one of the heat exchanger 18 and heat exchanger 19. Also, it is allowable that the heat exchanger 18 is series-installed at the rare absorption fluid outlet side of low-temperature heat exchanger 3 and that the heat exchanger 19 is installed in parallel with medium-temperature heat exchanger 11 to heat the intermediate absorption fluid.

In this way, the example 6 being provided with such configuration, the heat of cooling drain, subjected by cooling water to cooling and radiation, is recovered and effectively used for heating the absorption fluid, and the energy saving purpose can be achieved by reducing the quantity of heat at high-temperature regenerator 7A.

### Example 7:

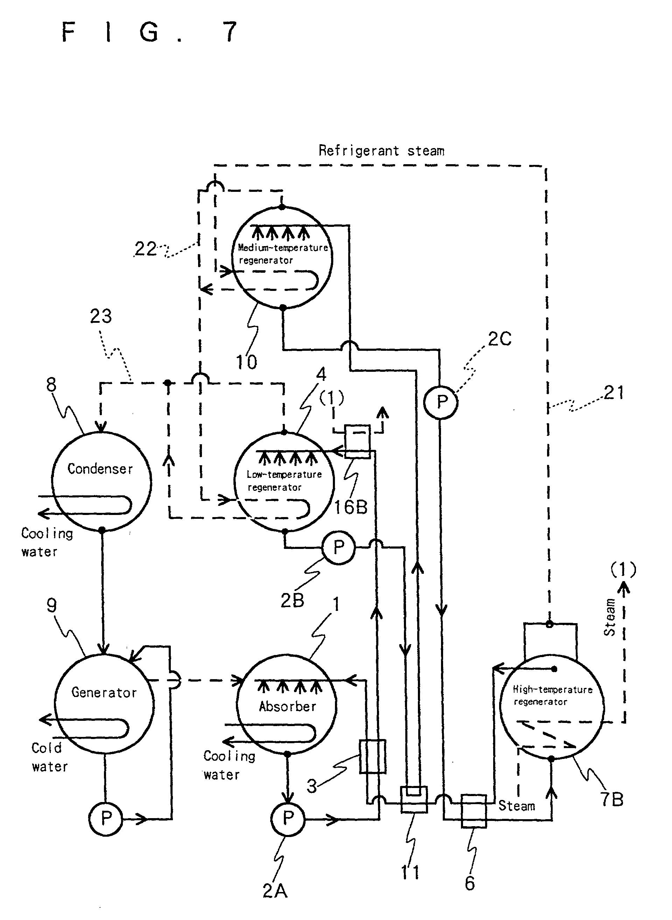

Fig. 7 shows the example 7 of the present invention. The example 7 is an innovation on the example 5. As shown in Fig. 7, there is provided a steam heating type high-temperature regenerator 7B in place of high-temperature regenerator 7, and an auxiliary regenerator 16B, in place of auxiliary regenerator 16, using as heating source the steam drain utilized for regeneration at high-temperature regenerator 7B.

Thus, the example 7 being provided with such configuration, the heat of steam drain either returned and supplied to the boiler or discharged is recovered and effectively used for heating the absorption fluid, and the energy saving purpose can be achieved by reducing the quantity of heat at high-temperature regenerator 7B.

### Example 8:

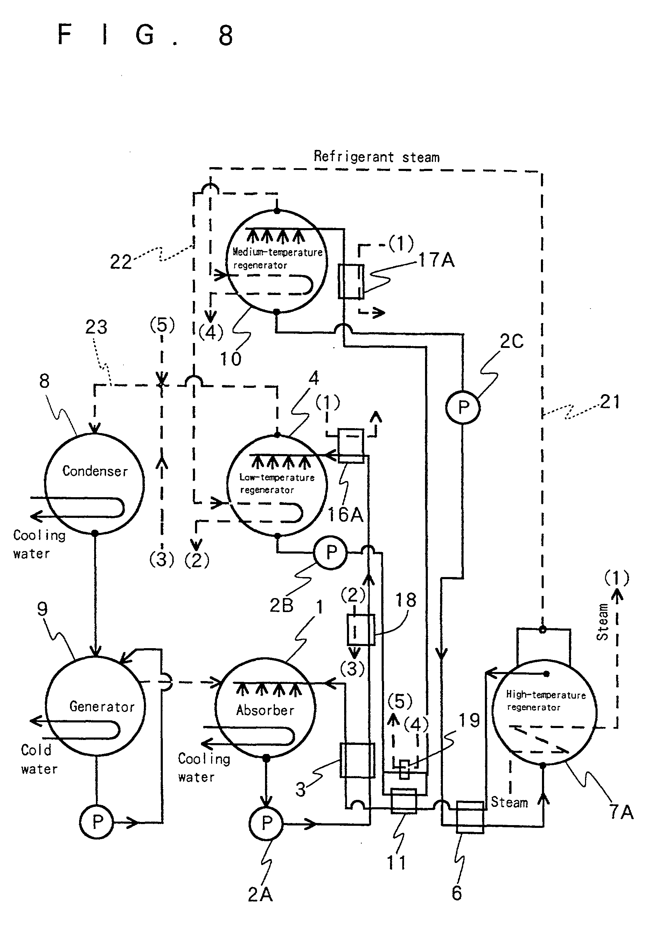

Fig. 8 shows the example 8 of the present invention. The example 8 is an innovation on the example 7. As shown in Fig. 8, a heat exchanger 18, which heats the rare absorption fluid with refrigerant drain after heating at low-temperature regenerator 4, is series-installed at the rare absorption fluid outlet side of low-temperature heat exchanger 3, and a heat exchanger 19, which heats the intermediate absorption fluid with refrigerant drain after heating at medium-temperature regenerator 10, is installed in parallel to medium-temperature heat exchanger 11. Each refrigerant drain supplied to the heat exchanger 18 and heat exchanger 19 flows into pipe 23 after coming out of the heat exchanger 18 and heat exchanger 19.

Incidentally, it is allowable to install only one of the heat exchangers 18, 19. Also, it is allowable that the heat exchanger 18 is installed in parallel with low-temperature heat exchanger 3 and that the heat exchanger 19 is series-installed at the intermediate absorption fluid outlet side of medium-temperature heat exchanger 11.

Thus, the example 8 being provided with such configuration, the heat of refrigerant drain, subjected by cooling water to cooling and radiation, is recovered and effectively used for heating the absorption fluid, and the energy saving purpose can be achieved by reducing the quantity of heat at high-temperature regenerator 7A

### Ezample 9:

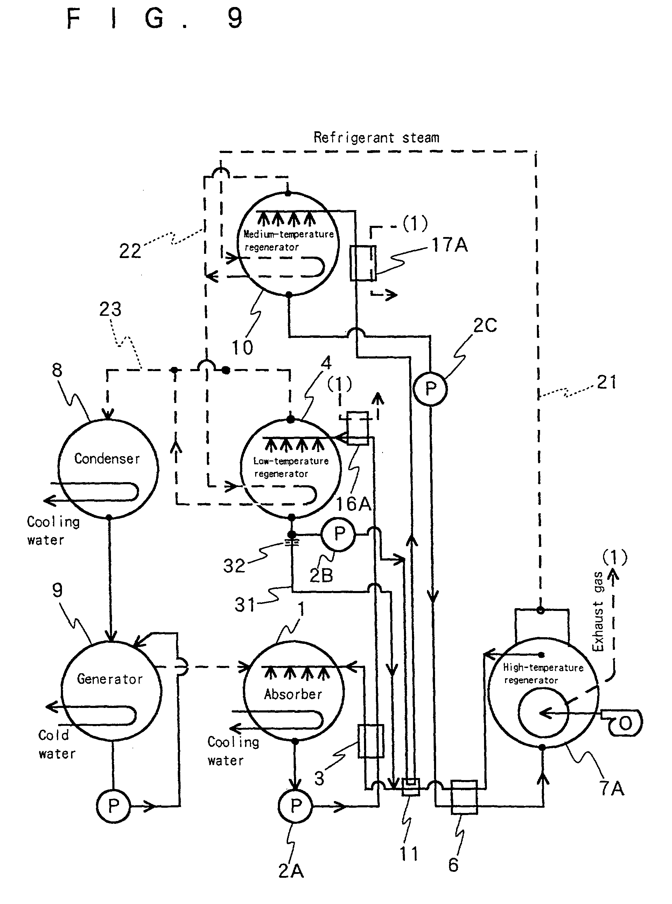

Fig. 9 shows the example 9 of the present invention. The example 9 is an innovation on the example 5. As shown in Fig. 9, a part of the intermediate absorption fluid is fed by intermediate absorption fluid pump 2B to intermediate regenerator 10, and the rest is branched by pipe 31 from upstream of the suction side of intermediate absorption fluid pump 2B and is directly fed to the heating side of low-temperature heat exchanger 3. That is, the suction side of intermediate absorption fluid pump 2B is connected by pipe 31 to the inlet side of the heating side of low-temperature heat exchanger 3. Incidentally, the flow rate at the branch point may be controlled, for example, by orifice 32.

Thus, the example 9 being provided with such configuration, the volume of absorption fluid absorbed into the high temperature side as well as heat losses generated at the high temperature side are reduced and consequently the heat efficiency is improved, and in addition it is possible to prevent cavitation of rare absorption fluid pump 2A.

### Example 10:

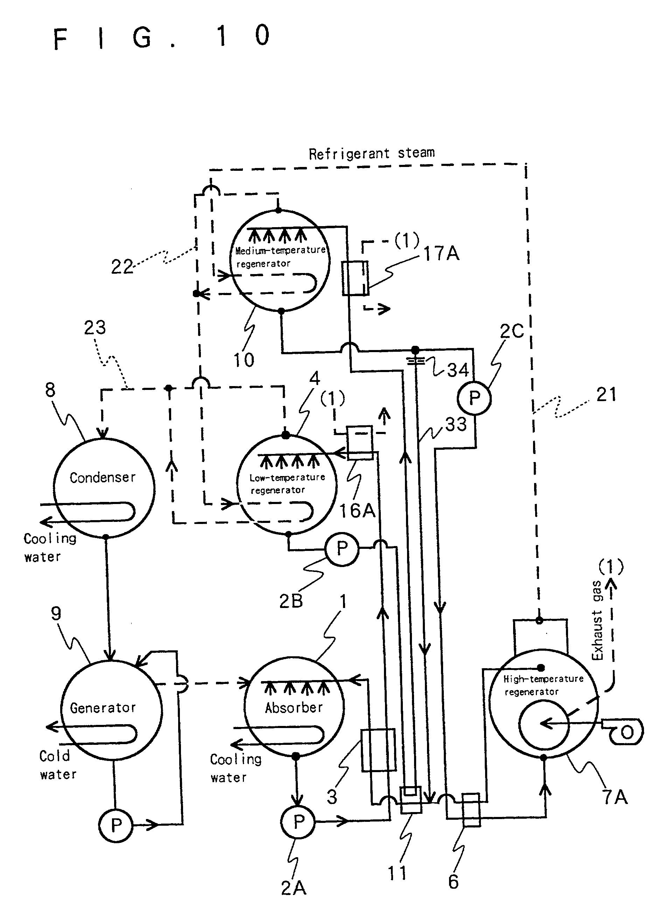

Fig. 10 shows the example 10 of the present invention. The example 10 is an innovation on the example 5. As shown in Fig. 10, a part of the concentrated absorption fluid is fed by concentrated absorption fluid pump 2C to high-temperature regenerator 7A, and the rest is branched by pipe 33 from upstream of the suction side of concentrated absorption fluid pump 2C and is directly fed to the heating side of medium-temperature heat exchanger 11. That is, the suction side of concentrated absorption fluid pump 2C is connected by pipe 33 to the inlet side of the heating side of medium-temperature heat exchanger 11. Incidentally, the flow rate at the branch point may be controlled, for example, by orifice 34.

Thus, the example 10 being provided with such configuration, the volume of absorption fluid supplied to the high temperature side as well as heat losses generated at the high temperature side are reduced and consequently the heat efficiency is improved, and in addition it is possible to prevent cavitation of rare absorption fluid pump 2A.

### Example 11:

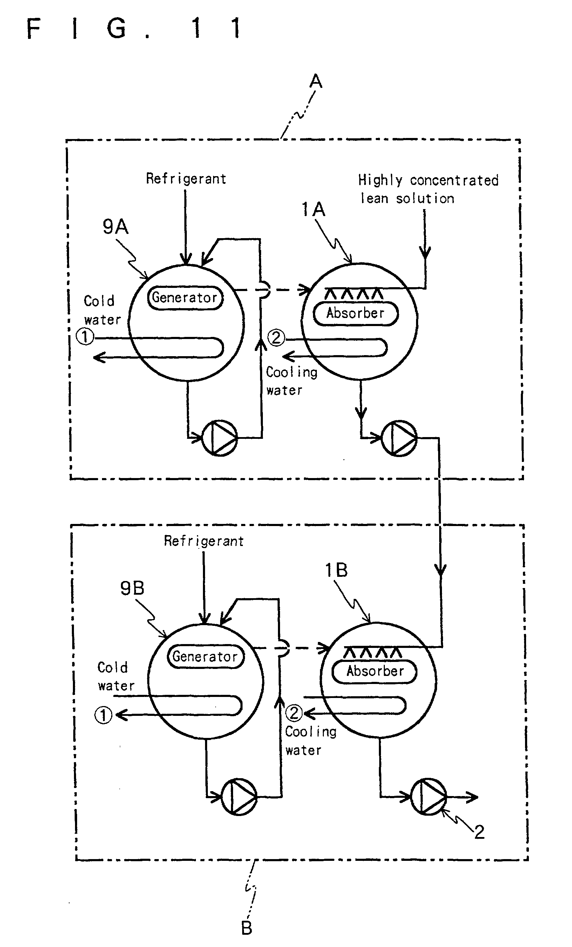

Fig. 11 shows the example 11 of the present invention. The example 11 is an innovation on the example 1 or example 5. As shown in Fig. 11, there is provided two combinations of absorber 1 and generator 9, that is, a first block A comprising first absorber 1A and first generator 9A and a second block B comprising second absorber 1B and second generator 9B, respectively. And the cold and cooling water are supplied from the second block B to the first block A, while the highly concentrated absorption fluid is series-supplied from the first block A to the second block B.

Thus, the example 11 being provided with such configuration, the internal pressures of absorber 1 and generator 9 can be changed per block, and the absorption fluid can be used in a wide range of concentration, widening the usable range of the absorption fluid to a very low concentration level, and it is possible to reduce the volume of absorption fluid circulated and to make the best use of the low temperature heat source.

### Example 12:

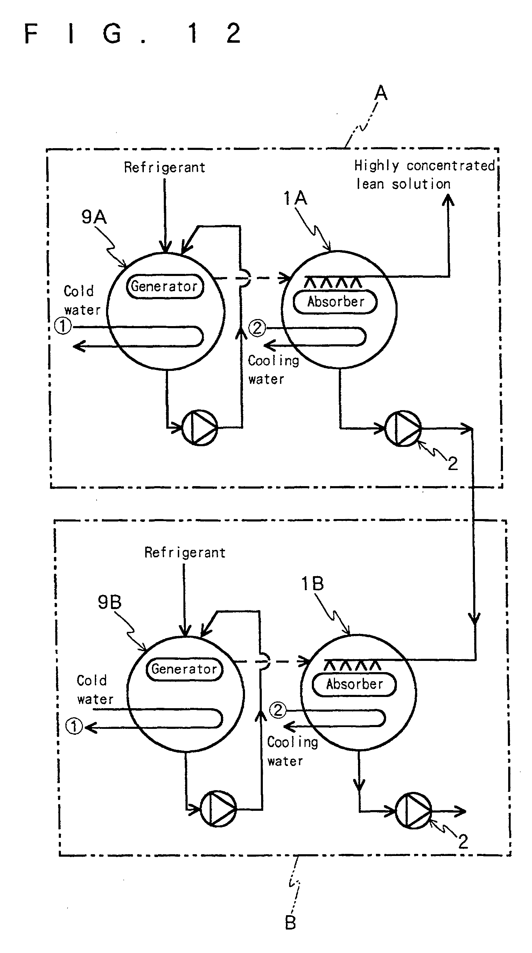

Fig. 12 shows the example 12 of the present invention. The example 12 is an innovation on the example 11. As shown in Fig. 12, there is provided two combinations of absorber 1 and generator 9, that is, a first block A comprising first absorber 1A and first generator 9A and a second block B comprising second absorber 1B and second generator 9B, respectively. And the cold water is supplied from the second block B to the first block A and the highly concentrated absorption fluid is supplied from the first block A to the second block B, while the cooling water is supplied in parallel to the first block A and second block B.

Thus, the example 12 being provided with such configuration, the internal pressures of absorber 1 and generator 9 can be changed per block, and the absorption fluid can be used in a wide range of concentration, widening the usable range of the absorption fluid to a very low concentration level, and it is possible to reduce the volume of absorption fluid circulated and to make the best use of the low temperature heat source.

### Example 13:

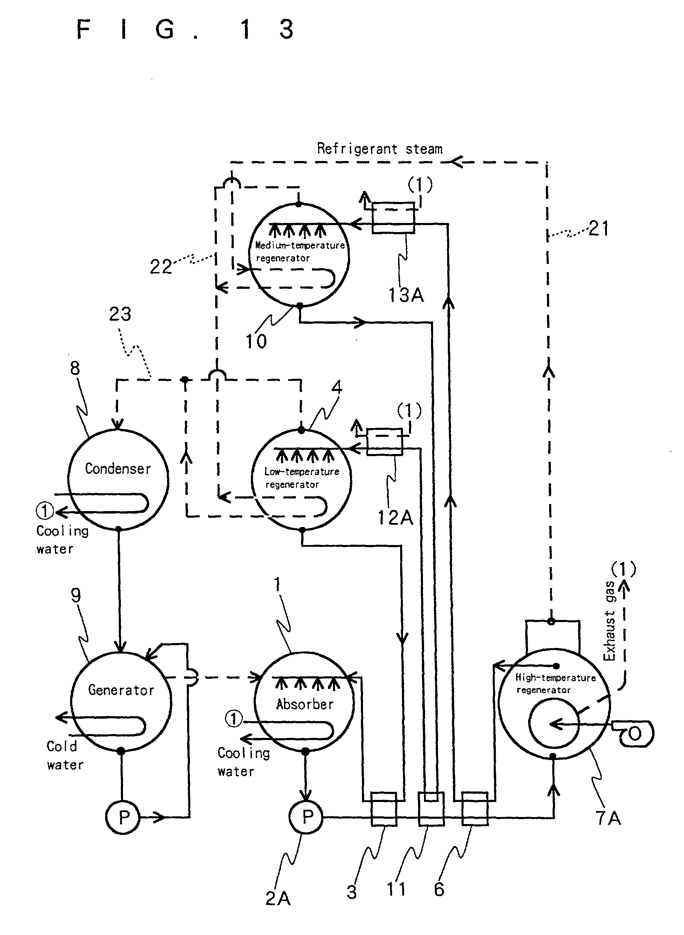

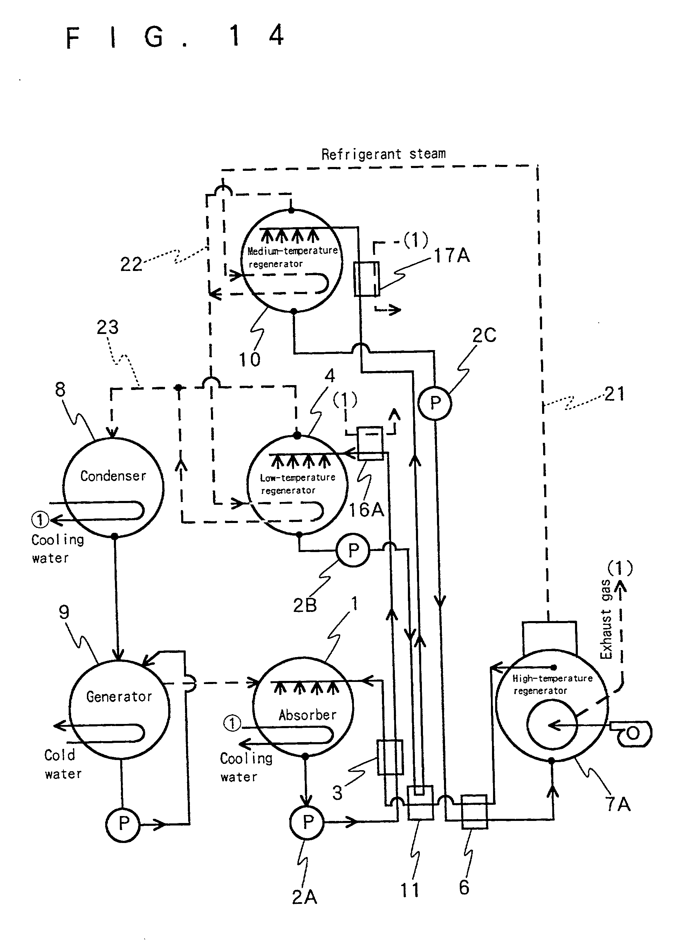

Fig. 13 and Fig. 14 show the example 13 of the present invention. The example 13 is an innovation on the example 1 or example 5. As shown in Fig. 13 and Fig. 14, the cooling water flows from condenser 8 to absorber 1 in the opposite direction of the normal operation.

Thus, the example 13 being provided with such configuration, the temperature and pressure of condenser 8 can be lowered by allowing the low-temperature cooling water to go first to condenser 8, thereby lowering the temperatures and pressures of low-temperature regenerator 4, high-temperature regenerator 7A and the circulation system, respectively, and therefore it is possible to lower the temperature and concentration of the absorption fluid and to make the best use of the low temperature heat source.

The present invention has been described above in accordance with the embodiments and examples, but it is to be understood that the present invention is not limited to only these embodiments and examples, involving a possibility of various modifications. For example, in the example 11 and example 12 wherein there is provided two combinations of absorber 1 and generator 9, it is allowable to install three or more combinations. Also, the heat exchanger which heats the absorption fluid with the refrigerant drain can be disposed in parallel or in series with the low-temperature heat exchanger and medium-temperature heat exchanger.

### POTENTIAL FOR INDUSTRIAL APPLICATION

As above described in detail, in the absorption refrigerator based upon the present invention, the amount of fuel consumed per cooling output can be readily reduced as a whole by combining a medium-temperature regenerator and a medium-temperature heat exchanger into one body for a double effect absorption refrigerator and a double effect absorption cooling/heating device, and at the same time, it is possible to achieve the power and energy saving purpose.

Also, the amount of heat per cooling output that has to be externally heated can be reduced by installing an auxiliary regenerator using as a heating source the exhaust gas or steam drain from a high-temperature regenerator at the inlet side of absorption fluid to a low-temperature regenerator and/or at the inlet side of absorption fluid to a medium-temperature regenerator, whereby it is possible to further reduce the consumption of energy.

## Claims

1. An absorption refrigerator which circulates an absorption fluid from an absorber, through a low-temperature heat exchanger, a high-temperature heat exchanger, a high-temperature regenerator, the high-temperature heat exchanger, a low-temperature regenerator and the low-temperature heat exchanger, back to the absorber, comprising a medium-temperature heat exchanger heating the absorption fluid and a medium temperature regenerator heating and concentrating the absorption fluid which are disposed between the high-temperature heat exchanger and low-temperature regenerator;
wherein the medium temperature heat exchanger is so as to heat the absorption fluid discharged from the low-temperature heat exchanger with the absorption fluid discharged from the medium-temperature regenerator.

2. An absorption refrigerator which circulates an absorption fluid from an absorber, through a low-temperature heat exchanger, a high-temperature heat exchanger, a high-temperature regenerator, the high-temperature heat exchanger, a low-temperature regenerator and the low-temperature heat exchanger, back to the absorber, comprising a medium-temperature heat exchanger heating the absorption fluid and a medium temperature regenerator heating and concentrating the absorption fluid, a first feeding means extracting a part or all of absorption fluid from the low-temperature regenerator and feeding same to the medium-temperature regenerator, and a second feeding means extracting a part or all of absorption fluid from the medium-temperature regenerator and feeding same to the high-temperature regenerator which are disposed between the high-temperature heat exchanger and low-temperature regenerator; wherein the medium temperature heat exchanger is so as to heat the absorption fluid discharged from the low-temperature heat exchanger with the absorption fluid discharged from the medium-temperature regenerator.

3. The absorption refrigerator of claim 1 or claim 2, comprising a heat exchanger which heats the absorption fluid of which heating source is the heating medium used for high temperature regeneration at the high -temperature regenerator.

4. The absorption refrigerator of claim 3, wherein the high-temperature regenerator is a direct fired heating type, comprising an auxiliary regenerator, of which heating source is the combustion exhaust gas of the high-temperature regenerator, at the absorption fluid inlet side to the medium-temperature regenerator in the range from the high-temperature heat exchanger to the medium-temperature regenerator, and/or at the absorption fluid inlet side of the low-temperature regenerator in the range from the medium-temperature heat exchanger to the low-temperature regenerator.

5. The absorption refrigerator of claim 3, wherein the high-temperature regenerator is a direct fired heating type, comprising an auxiliary regenerator, of which heating source is the combustion exhaust gas of the high-temperature regenerator, at the absorption fluid inlet side to the low-temperature regenerator in the range from the low-temperature heat exchanger to the low-temperature regenerator, and/or at the absorption fluid inlet side of the medium-temperature regenerator in the range from the medium-temperature heat exchanger to the medium-temperature regenerator.

6. The absorption refrigerator of claim 3, wherein the high-temperature regenerator is a steam heating type, comprising auxiliary regenerator, of which heating source is the steam drain from the high-temperature regenerator, at the absorption fluid inlet side to the low-temperature regenerator in the range from the medium-temperature heat exchanger to the low-temperature regenerator.

7. The absorption refrigerator of claim 3, wherein the high-temperature regenerator is a steam heating type, comprising auxiliary regenerator, of which heating source is the steam drain from the high-temperature regenerator, at the absorption fluid inlet side to the low-temperature regenerator in the range from the low-temperature heat exchanger to the low-temperature regenerator.

8. The absorption refrigerator of claim 1, 2, 3, 4, 5, 6 or 7, comprising a heat exchanger which heats rare absorption fluid, of which heating source is the refrigerant drain after heating at the low-temperature regenerator, being disposed in parallel or in series with the low-temperature heat exchanger at the absorption fluid outlet side of the low-temperature heat exchanger.

9. The absorption refrigerator of claim 1, 2, 3, 4, 5, 6, 7 or 8, comprising a heat exchanger which heats medium or rare absorption fluid, of which heating source is the refrigerant drain after heating at the medium-temperature regenerator, being disposed in parallel or in series with the medium-temperature heat exchanger.

10. The absorption refrigerator of claim 2, 3, 5, 7, 8 or 9, wherein a part of the absorption fluid is bypassed from upstream side of the first feeding means to the inlet side of the heating line of the low-temperature heat exchanger.

11. The absorption refrigerator of claim 2, 3, 5, 7, 8, 9 or 10, wherein a part of the absorption fluid is bypassed from upstream side of the second feeding means to the inlet side of the heating line of the medium-temperature heat exchanger.

12. The absorption refrigerator of claim 1, 2, 3, 4, 5, 6, 7, 8, 9, 10 or 11, comprising a plurality of combinations of absorber and generator, wherein cold water, cooling water and absorption fluid are supplied in series to the plurality of combinations.

13. The absorption refrigerator of claim 1, 2, 3, 4, 5, 6, 7, 8, 9, 10 or 11, comprising a plurality of combinations of absorber and generator, wherein cold water and absorption fluid are supplied in series to the plurality of combinations, while cooling water is supplied in parallel to the plurality of combinations.

14. The absorption refrigerator of claim 12 or 13, wherein cooling water is supplied from a condenser to the absorber.
